# EUROPEAN PATENT APPLICATION

(11) **EP 1 176 847 A2**
(43) Date of publication of application: **30.01.2002**
(21) Application number: 01116413.4
(22) Date of filing: 06.07.2001
(51) Int. Cl.: H04Q 11/04

(54) **Method and apparatus for determining, in real-time, a statistical bandwith used in an ATM satellite communications network**

(30) Priority: 25.07.2000 US 625118
(71) Applicant: TRW INC., Redondo Beach, CA 90278 (US)
(72) Inventor: Prieto, Jaime L. Jr., Torrance, CA 90503 (US)
(74) Representative: Schmidt, Steffen J., Dipl.-Ing.

(57) **Abstract**

A method and apparatus are provided for determining, in real-time, a statistical bandwidth being used by at least one data stream of a communications satellite 10. An outbound module 100 within a satellite 10 includes at least one buffer 104-112 for queuing a data stream received in an uplink and transmitted in a downlink. The outbound module 100 includes a switch 102 for directing packets from multiple data streams to corresponding buffers 104-112 depending upon the quality of service associated with each data stream and corresponding buffer 104-112. A packet monitor 116 monitors the data stream traffic to each buffer 104-112 in order to measure traffic parameters such as the number of packets or bits received per second by one buffer 104-112 or multiple buffers in an outbound module 100. The traffic parameters may also include a count of the packets or bits received over a period of time by one or more buffers. A bandwidth measurement module 114 calculates the statistical bandwidth associated with each data stream based upon the traffic parameters measured by the packet monitor 116. The bandwidth measurement 114 module may further calculate the statistical bandwidth actually being used by the entire outbound module 100.

## Description

### BACKGROUND OF THE INVENTION

The present invention generally relates to a satellite communications network and more specifically to an ATM satellite communications network for real-time determination of the equivalent statistical bandwidth being used at any instant in time by data streams carried through an output module port of a communications satellite.

Satellite communications networks are both in existence and in development for supporting communications channels carrying a variety of data types, such as audio data, video data, video conferencing data, broadcast video data, web surfing data and the like. The next generation satellite communications networks support the ATM (a synchronous transfer mode) protocol for conveying the various data types. The ATM protocol represents a connection oriented protocol. As a connection oriented protocol, an ATM network operates such that, before a call is permitted to take place through the network, a network provider guarantees that existing calls will not be unduly adversely affected. For instance, the network provider guarantees that existing connections will maintain a certain minimum quality of service. In addition, before establishing a new call within an ATM network, the network provider must insure that the network will afford a desired minimum quality of service for the new call.

The quality of service defines an ATM requirement for a particular connection, such as a data stream packet/loss ratio, a delay or delay variation between data stream packet transmissions and the like. Two exemplary ATM network control techniques are guaranteed minimum quality of service and best efforts minimum quality of service. In an ATM network, the assumed apriori equivalent bandwidth for new calls and existing calls may be used to determine call admission control for new calls and scheduling with respect to the time of transmission of packets associated with existing calls.

Call admission control is the process by which an ATM network determines whether or not to accept a new call or user who is requesting some service from the network. The freedom and flexibility afforded within call admission control and scheduling are dependent upon an amount of bandwidth afforded to an ATM network and upon the "equivalent" bandwidth requirements of individual calls requested from the network. Equivalent bandwidth in this context refers to a statistical amount of bandwidth required by a particular connection in order to meet a minimum quality of service required by the connection.

Existing ATM networks govern call admission control and scheduling based on bandwidth models designed to estimate the amount of bandwidth in use within the network and the additional bandwidth demands required of a new call. Conventional bandwidth models are designed based on a priori knowledge of traffic characteristics.

More specifically, ATM connections are setup based on call admission control algorithms which use a priori knowledge of traffic characteristics provided by a new caller seeking admission and provided within "traffic contracts" concerning existing calls. The call admission control algorithm creates and maintains a "traffic contract" with each new caller upon admission to the network. The traffic contracts include a record of estimated statistical bandwidth expected to be used with each new caller, for which network access has been granted. Traffic contract values are assigned for each connection/priority class (e.g., a class of data streams requiring a predetermined minimum quality of service). The traffic contract values for existing calls are used continuously to program a scheduler that controls data stream transmission between various connections and/or data stream classes.

The network provider tracks statistical bandwidth utilization based upon the estimated statistical bandwidth expectations defined in the traffic contracts. By way of example, the network provider may estimate statistical bandwidth utilization based on call parameters, such as sustainable cell rate (SCR), peak cell rate (PCR) and maximum burst size (MBS). The network provider maintains tables of the aforementioned call parameter values as theoretical information or models regarding the projected network capabilities as limited by estimated bandwidth demand of existing calls.

In the past, modeling techniques have been proposed, such as in an article by Gringeri et al. titled "Traffic Shaping, Bandwidth Allocation, and Quality Assessment of IMPEG Video Distribution Over Broadband Networks", IEEE Network November/December 1998, pages 94-107. The Gringeri et al. article provides exemplary equations for calculating statistical bandwidth based on certain call parameters.

However, existing ATM networks have experienced certain limitations by relying upon a priori knowledge to determine bandwidth availability and usage. Bandwidth models are static and do not represent actual traffic loading by a data stream upon the network since such models are based upon predetermined theoretical traffic patterns which are not dynamically adjustable to reflect actual bandwidth usage. Static bandwidth models are utilized for call admission control, scheduling, ATM available bit rate (ABR), guaranteed frame rate (GFR) and the like. Consequently, all of the aforementioned processes operate inefficiently and fail to maximize the use of bandwidth resources.

A need remains for a more accurate manner of determining bandwidth usage. It is an object of the present invention to meet this need.

### BRIEF SUMMARY OF THE INVENTION

A preferred embodiment of the present invention utilizes real-time information obtained with respect to communications channels in use in order to determine an amount of statistical bandwidth actually being used at any instant in time. By determining actual statistical bandwidth usage, the preferred embodiment more accurately characterizes actual bandwidth usage of different connections and user applications. Accurate bandwidth characterization allows network operators to more efficiently utilize shared bandwidth resources, thereby affording higher revenue, while continuing to guarantee a minimum quality of service for individual users.

According to one preferred embodiment of the present invention, a method is provided for determining in real-time an equivalent statistical bandwidth being used by at least one data stream carried through a communications satellite. The method includes measuring at least one traffic parameter associated with at least one data stream while the data stream is conveyed by the satellite between an uplink and a downlink. The traffic parameters are representative of the statistical bandwidth actually being used to carry the data stream. The measured traffic parameters are used to determine the statistical bandwidth actually in use to carry one or more data streams. According to the method of the preferred embodiment, at least one of a running average and mean deviation may be obtained based on a measured traffic parameter. The measurement of the traffic parameter may include determining at least one of a number of packets received per second, a number of bits received per second, a count of the total packets received over a period of time and a count of the total bits received over a period of time. The measuring step may further comprise measuring a common traffic parameter for multiple data streams. The common traffic parameter may include at least one of an aggregate arrival rate per downlink for multiple data streams, an overall inter-arrival time per downlink, an arrival rate per priority class of data streams and an overall inter-arrival time per priority class of data streams.

According to an alternative embodiment, an apparatus is provided for determining in real-time an equivalent statistical bandwidth being used by at least one data stream carried through a communications satellite. The apparatus comprises at least one buffer or queue for temporarily storing packets from a data stream received over one or more satellite uplinks before transmission collectively with other data streams over a satellite downlink. The apparatus further includes a traffic measurement module measuring at least one traffic parameter associated with the data being queued into the buffer. The apparatus may further include a switch located upstream of the buffer and traffic measurement module for receiving multiple data streams having different priority classes. The switch switches each data stream to a corresponding buffer based upon the priority class associated with each data stream and buffer.

A processor on the satellite determines a statistical bandwidth being used by the data stream based on the measured traffic parameters. The processor may obtain at least one of a running average and mean deviation for each data stream based on measured traffic parameters. The processor may measure, from the data stream, at least one of a number of packets received per second by one or more buffers, a number of bits received per second by one or more buffers, a count of the total packets received over a period of time by one or more buffers and a count of the total bits received over a period of time by one or more buffers.

The apparatus may calculate the packets and bits received by a single buffer, by a group of buffers in a common priority class, by all of the buffers associated with a particular downlink (e.g., associated with a particular outbound module port) and the like. The apparatus may further include a processor for measuring a common traffic parameter for multiple data streams (having a common priority class or different priority classes). The common traffic parameter may include at least one of an aggregate arrival rate per downlink for multiple data streams received by one or more buffers, an overall inter-arrival time per downlink for one or more buffers, an arrival rate for priority class of data streams for one or more buffers and an overall inter-arrival time per priority class of data streams for one or more buffers.

According to yet another alternative embodiment of the present invention, a running average and/or mean deviation computation may be performed to estimate the equivalent statistical bandwidth in real-time for one or more buffers. The equivalent statistical bandwidth information may then be used to dynamically adjust the scheduling algorithm bandwidth as usage varies over time. Alternatively or in addition, the equivalent statistical bandwidth information may be used to provide continuous bandwidth information to a call admission controller to afford more accurate control and allow the network to more accurately balance throughput and quality of service between multiple resources or connections. The real-time bandwidth computation technique determines equivalent statistical bandwidth usage in real-time for satellite packet-switched network management.

### BRIEF DESCRIPTION OF THE DRAWINGS

Figure 1 illustrates a satellite communications system supporting an ATM network in accordance with a preferred embodiment of the present invention.
Figure 2 illustrates an outbound module port housed within a communications satellite in accordance with a preferred embodiment of the present invention.
Figure 3 illustrates a message sequence chart diagram setting forth the processing sequence to establish a call within an ATM network in accordance with a preferred embodiment of the present invention.

### DETAILED DESCRIPTION OF THE INVENTION

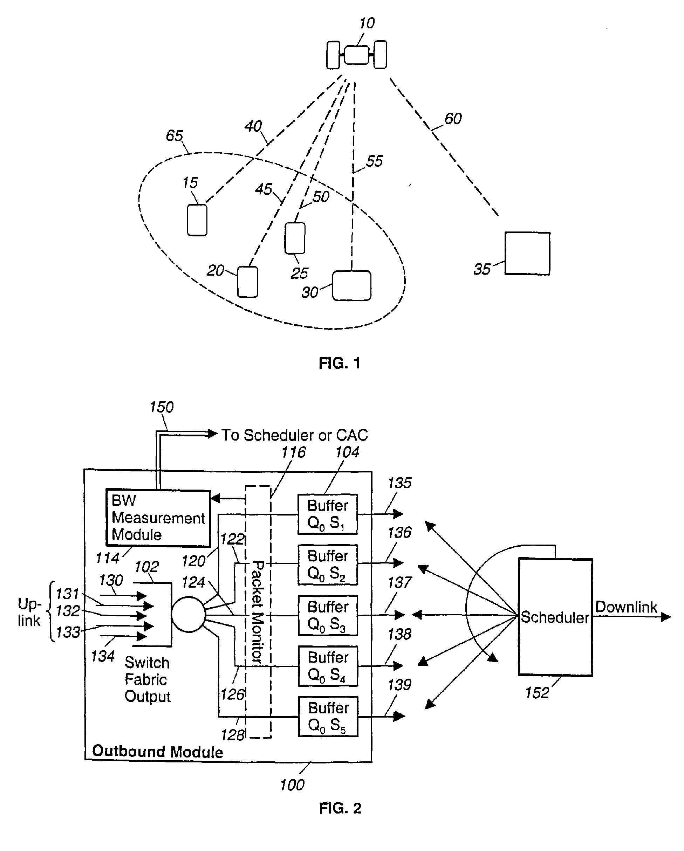

Figure 1 illustrates a satellite communications system 5 that supports an ATM network for carrying communications data, such as voice, audio, video, video conferencing, broadcast video, internet information, data and the like. The satellite communications system 5 includes a satellite 10 that communicates with one or more user terminals 15, 20, 25 and 30 via bi-directional communications links 40-55. The bi-directional communications links 40-55 each include an uplink connection and a downlink connection (not separately shown) for passing communications data to and from the satellite 10. The satellite 10 also communications with an earth station 35 and/or other user terminals via bi-directional communications link 60 which includes an uplink and a downlink for passing communications data to and from the satellite 10. The user terminals 15-30 may be in a common footprint 65 of a single or several beamspot(s) defined by an antenna of the satellite 10. The ground station 35 may be in the same or a different footprint(s) of a common or different beamspot(s).

The bi-directional communications links 40-55 may carry one or more data streams to and from the satellite 10. Each data stream supported by the bi-directional communication links 40-55 corresponds to a single call or connection previously or to be established by the ATM network. By way of example only, user terminal 15 may be a hand held mobile cellular phone that establishes a connection with the ATM network by maintaining an uplink connection and a downlink connection over bi-directional communications link 40 with the satellite 10. The uplink connection from the user terminal 15 to the satellite 10 would include data transmitted from the user terminal 15, such as voice data. The satellite 10 collects, via the uplinks within bi-directional communication links 40-55, all data transmitted from user terminals 15-30. Upon receiving the uplink information from bi-directional communication links 40-55, the satellite 10 combines the received data based upon ATM network protocols and transmits the combined data over a downlink in the bi-directional communications link 60 to the ground station 35. In the reverse direction, the satellite 10 receives uplink data from the ground station 35 and disseminates the uplink data to corresponding user terminals 15-30.

Figure 2 illustrates a satellite outbound module 100 according to a preferred embodiment of the present invention. The outbound module 100 represents a point in the satellite 10 where several traffic streams are combined into a single downlink stream. For instance, the outbound module may be a module in the satellite in which multiple uplink traffic stream are combined and passed to a single downlink traffic stream. The uplink traffic streams may be for multiple uses located in common or different footprints of the beam spots created by the satellite 10. A fast-packet switch is provided in the satellite for receiving incoming data packets from the traffic streams. The switch identifies, for each data packet, a destination downlink beam. Based on the destination for each packet, the switch directs each data packet to a corresponding outbound module.

The outbound module 100 is housed within the satellite 10 and operates to receive communications data over the uplinks within bi-directional communications links 40-55. The communications data received by the outbound module 100 is segmented into packets in accordance with the ATM protocol. The outbound module 100 conveys the packets of communications data, via queues or buffers, to a common downlink such as in bi-directional communications link 60. The aggregate queued communications data is subsequently passed to ground station 35. The outbound module 100 includes a switch 102 for receiving communications data from a plurality of individual connections or callers. Each connection or caller is associated with a single uplink from the user terminals 15-30.

By way of example, Figure 2 illustrates five incoming communications signals 130-134 which are subsequently redirected by the switch 102 to corresponding buffers 104-112. The buffers 104-112 may vary in number and criteria for receiving communications data packets. In the example of Figure 2, five buffers are illustrates, each of which has a different priority class or quality of service (QoS) associated therewith. For instance, buffer 104 receives communications data packets from a data stream that require a particular quality of service designated as QoS1. Similarly, buffers 106-112 receive communications data packets from corresponding data streams associated with second through fifth qualities of services QoS2-QoS5.

The buffers 104-112 receive corresponding communications data packets along lines 120-128, respectively, from switch 102. The switch 102 directs corresponding packets of communications data from connections 130-134 to a corresponding buffer 104-112 based upon the quality of service required by the data packet.

The buffers 104-112 represent FIFO (first in first out) or FCFS (first come first served) queues, whereby an incoming data stream of packets is temporarily stored or queued up in one of buffers 104-112 before being selected for transmission over lines 135-139 to the downlink within bi-directional communications link 60. A scheduler 152 determines the order in which the buffers 104-112 distribute data packets along lines 135-139, respectively, to the downlink.

The outbound module 100 further includes a bandwidth measurement module 114 which communicates with a packet monitor 116 in order to record and track the data streams passing over lines 120-128 to buffers 104-112. The packet monitor 116 measures at least one traffic parameter associated with each data stream carried over lines 120-128 and queued into the buffers 104-112. By way of example only, the traffic parameters may include one or more of a count of the number of packets received per second by each buffer, a count of the number of bits received per second by each buffer, a count of the total number of packets received by a particular buffer over a period of time and/or a count of the total number of bits received by a particular buffer over a period of time. Optionally, the packet monitor 116 may obtain aggregate counts (packets or bits) by a group of buffers, such as in a common or similar priority classes, or by all of the buffers within a particular outbound module. Alternatively or in addition, the packet monitor 116 may obtain an average of the counts (packets or bits) received by some or all of the buffers within a particular outbound module or by a group of buffers within a particular outbound module 100. For instance, it may be desirable to utilize separate buffers for certain connections or for every connection supported by an outbound module 100. Several of the buffers 104-112 may queue communications data packets requiring a common quality of service (e.g., QoS3 equals QoS4). It may be desirable to determine an average traffic parameter for one or more qualities of service. The quality of service for a particular buffer may also be referred to as the buffer's priority class.

The traffic parameters collected by the packet monitor 116 are passed to a bandwidth measurement module 114 which calculates a statistical bandwidth actually being used by the data streams carried over paths 120-128 and through buffers 104-112. The bandwidth measurement module 114 calculates statistical bandwidth for each data stream based upon the traffic parameters collected by the packet monitor 116. The bandwidth measurement module 114 may calculate statistical bandwidths for individual buffers 104-112, for groups of buffers associated with a common priority class, for an entire outbound module 100 and the like. By way of example, the bandwidth measurement module 114 may calculate the aggregate arrival rate per outbound module 100 (e.g., mean, standard deviation and the like). The aggregate arrival rate per outbound module corresponds to the rate (packets or bits per second) at which the data streams associated with connections 130-134 are received. In addition, the bandwidth measurement module 114 may calculate the overall inter-arrival time(IAT) per outbound module (e.g., mean, standard deviation and the like). The overall inter-arrival time represents the time between arrival of packets. The bandwidth measurement module 114 may calculate the overall inter-arrival time for the outbound module 100 in order to determine the burstiness of the data streams as a whole received by the outbound module 100.

In addition or alternatively, the bandwidth measurement module 114 may calculate the statistical bandwidth per buffer or priority class. By way of example, the bandwidth measurement module 114 may calculate the arrival rate per buffer 104-112 and/or the inter-arrival time per buffer 104-112. The arrival rate and inter-arrival time per priority class may be characterized in any statistical fashion, such as by the average, mean, median, standard deviation and the like. Similarly, the statistical bandwidth for the outbound module 100 may be characterized by utilizing any statistical measurement, such as the average, mean, median, standard deviation and the like.

Once the traffic parameters are obtained, the statistical calculation may be made for each desired random variable in order to calculate the equivalent bandwidth for one or more data streams. The parameters for real-time statistical bandwidth calculation per priority class and per outbound module are, by way of example only, moving average estimation, standard deviation estimation, and information vector (I = [λ, σ²,α]). Variables that may be used to calculate the real-time statistical bandwidth include µ which represents priority-class buffer index, λ_{µ} which represents mean average arrival rate (packets/second), σ_{µ}² which represents variance of arrival rate (packets/seconds)²), α_{µ} which represents instantaneous variance (per unit time) of the inter-arrival time packet arrival process (cells/second), IAT_{µ} which represents mean inter-arrival time, and IAT_{µ}² which represents the second moment of the inter-arrival time.

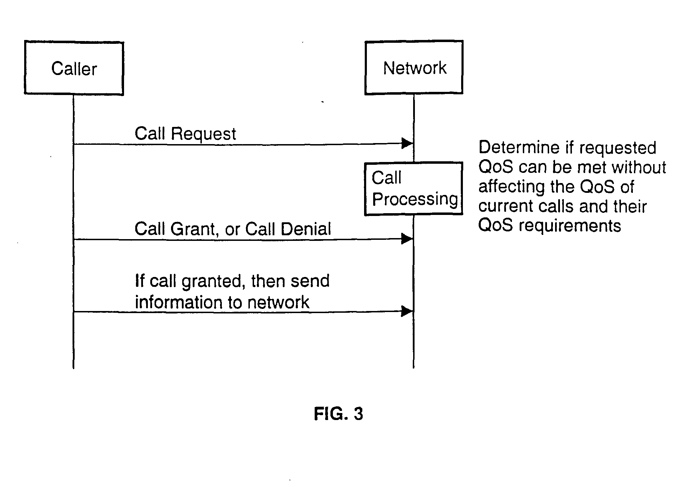

Figure 3 illustrates a graphical representation of a call admission control procedure. A caller who desires to make a call sends a call request message to the network requesting a connection. The network call processing function may be on the satellite or on the ground. The network continuously receives status information regarding current connections. Upon receiving the call request message, the network determines in the call processing block whether a quality of service for the new caller may be guaranteed without reducing the quality of service offered to existing callers below a minimum required quality of service.

The network sends a call grant/deny message to the new caller either accepting or rejecting the call based on the outcome of the call processing block. The network accepts the new caller and grants access to the network if the call processing block determines that the new call may be admitted while still guaranteeing a minimum quality of service for the new caller and for all existing calls. Otherwise, the network rejects the new caller. If the network accepts the new caller, then the new caller sends the final acknowledgment of the connection, along with the first segment of user information to the network and the new call is established.

According to an alternative embodiment of the present invention, the new call is granted or denied access to the ATM network based on the statistical bandwidth measurements taken in real-time as explained above.

While particular elements, embodiments and applications of the present invention have been shown and described, it will be understood, that the invention is not limited thereto since modifications may be made by those skilled in the art, particularly in light of the foregoing teachings. It is, therefore, contemplated by the appended claims to cover such modifications as incorporate those features which come within the spirit and scope of the invention.

## Claims

1. A method for determining, in real-time, a statistical bandwidth being used by at least one data stream of a communications satellite ATM network, the method comprising:
measuring at least one traffic parameter associated with at least one data stream while the data stream is conveyed by the satellite between an uplink and a downlink, the traffic parameter being representative of an amount of bandwidth actually being used to carry the data stream; and
determining the statistical bandwidth in use to carry the data stream.

2. The method of claim 1, wherein said measuring step comprises:
measuring a common traffic parameter for multiple data streams, said common traffic parameter including at least one of an aggregate arrival rate per downlink for multiple data streams, an overall inter-arrival time per downlink, an arrival rate per priority class of data streams and an overall inter-arrival time per priority class of data streams.

3. The method of claim 1, further comprising:
receiving multiple data streams having different priority classes and switching each data stream to a corresponding buffer in the satellite based upon the priority class of the data stream and buffer.

4. The method of claim 1, wherein said determining step comprises calculating a statistical bandwidth for all data streams associated with a common downlink.

5. An apparatus for determining, in real-time, a statistical bandwidth being used by at least one data stream of a communications satellite ATM network, the apparatus comprising:
at least one buffer queuing a data stream from one or more satellite uplinks before transmission over a satellite downlink; and
a traffic measurement module measuring at least one traffic parameter associated with the data stream being queued into the buffer, said traffic parameter being representative of a statistical bandwidth presently being used to carry the data stream.

6. The apparatus of claim 5, further comprising:
a switch, receiving multiple data streams having different priority classes, and switching each data stream to a corresponding buffer based upon the priority class associated with each data stream and buffer.

7. The apparatus of claim 1, wherein said traffic measurement module measures, from the data stream, at least one of a number of packets received per second, a number of bits received per second, a count of the packets received over a period of time and a count of the bits received over a period of time.

8. A satellite communications ATM network, comprising:
a satellite;
a ground station; and
a communications terminal maintaining a communications link with the ground station via the satellite, said communications link carrying a data stream of ATM data packets to and from the ground station;
said satellite comprising:
a buffer queuing the data stream before transmission over a downlink to the ground station; and
a bandwidth measurement module for measuring, in real time, a statistical bandwidth of the data stream being queued by the buffer before transmission over the downlink.

9. The satellite communications ATM network of claim 8, wherein said satellite further comprises:
a traffic measurement module measuring at least one traffic parameter associated with the data stream being queued into the buffer, said traffic parameter being representative of a statistical bandwidth presently being used to carry the data stream.

10. The satellite communications ATM network of claim 8, wherein said satellite further comprises:
a processor for measuring a common traffic parameter for multiple data streams, said common traffic parameter including at least one of an aggregate arrival rate per downlink for multiple data streams, an overall inter-arrival time per downlink, an arrival rate per priority class of data streams and an overall inter-arrival time per priority class of data streams.
